(19) Europäisches Patentamt
European Patent Office
Office européen des brevets

(11) **EP 2 104 393 A1**

(12) **EUROPEAN PATENT APPLICATION**

(43) Date of publication:
**23.09.2009 Bulletin 2009/39**

(51) Int Cl.:
***H04W 74/08*** (2009.01)

(21) Application number: **09152310.0**

(22) Date of filing: **06.02.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **21.03.2008 JP 2008074696**

(71) Applicant: **Fujitsu Ltd.**
**Kawasaki-shi, Kanagawa 211-8588 (JP)**

(72) Inventors:
• **Sato, Tomonori**
**c/o FUJITSU LIMITED,**
**Kawasaki-shi, Kanagawa 211-8588 (JP)**

• **Kawasaki, Toshio**
**c/o FUJITSU LIMITED,**
**Kawasaki-shi, Kanagawa 211-8588 (JP)**
• **Nakagawa, Takao**
**c/o FUJITSU LIMITED,**
**Kawasaki-shi, Kanagawa 211-8588 (JP)**

(74) Representative: **Holtby, Christopher Lawrence**
**Haseltine Lake LLP**
**Lincoln House, 5th Floor**
**300 High Holborn**
**London WC1V 7JH (GB)**

(54) **Communication system, mobile station, and communication method**

(57)    A communication system includes a mobile station (200) and a base station (100). The mobile station (200) calculates estimated TA information based on the position of the mobile station (200) and an amount of propagation path delay. The mobile station (200) determines, based on TA information transmitted from the base station (100) and the estimated TA information, whether the TA information is addressed thereto. The mobile station (200) determines whether to transmit "Message 3" to the base station (100) depending on determination results, and transmits "Message 3" when the TA information is addressed thereto.

FIG.2

**Description**

BACKGROUND

1. Field

The present invention relates to a technology for communication between a base station and a mobile station using a random access procedure.

2. Description of the Related Art

A mobile communication system of the next generation (e.g., mobile communication system based on LTE (Long Term Evolution)) enables communication of packets and various types of data including digital voice, image, etc., between mobile stations. The mobile station is called a user equipment (UE) too.

This mobile communication system performs an initial access using a RACH (Random Access Channel) to cope with an access failure, etc., that occur when a plurality of mobile stations access a base station (eNB) at one time (see, e.g., Japanese Translation of PCT International Patent Application Laid-open Publication No. 2002-524990 and Japanese Laid-open Patent Publication Nos. 2001-326978 and 2004-274794).

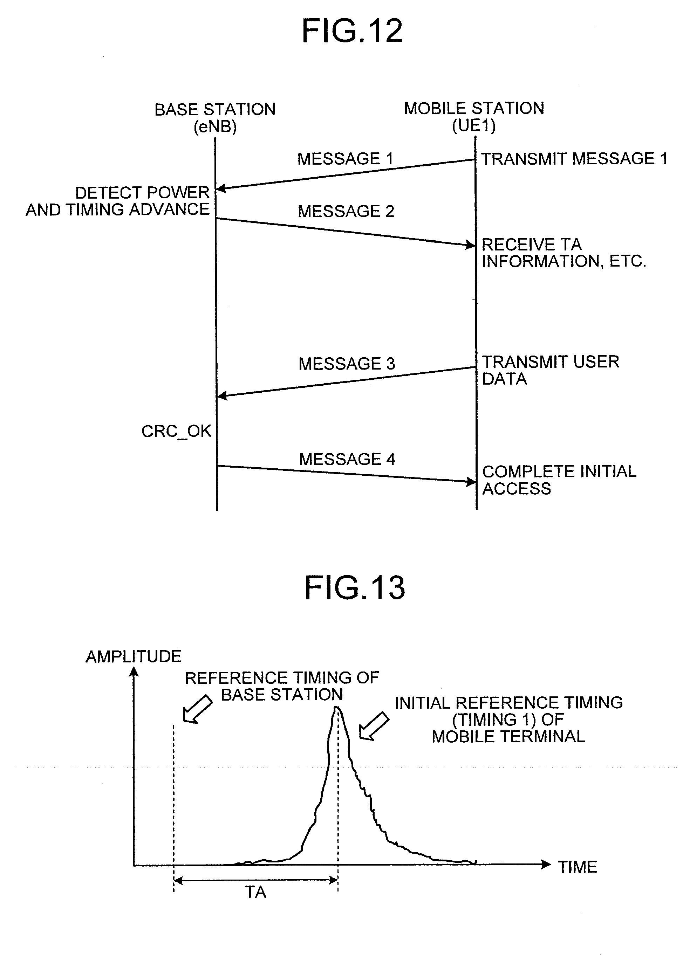

Fig. 12 illustrates one example of a sequence up to completion of the initial access by the RACH. As illustrated in Fig. 12, the mobile station (UE1) selects a preamble number at random and transmits "Message 1" to the base station (eNB).

The base station receives the signal of the mobile station, performs power detection, calculates timing information (hereinafter, "TA (Timing Advance) information"), and notifies the mobile station of this TA information by means of "Message 2". The mobile station adjusts transmitting timing, using the TA information notified by the base station and transmits information unique to the mobile station by means of "Message 3" to the base station.

The base station decodes "Message 3" and notifies the mobile station of information necessary for connection of a call by means of "Message 4". As seen above, after transmission and receipt of "Message 1" to "Message 4" between the mobile station and the base station, the mobile station may perform the connection of the call.

The TA information will now be explained. Fig. 13 is a diagram for explaining one example of the TA information. The above mobile communication system requires that the signal of the mobile station arrive in synchronization with a reference timing of the base station. As in the example of Fig. 13, if the signal of the mobile station arrives at the base station in timing 1, the base station transmits the timing information to the mobile station to expedite transmitting timing by a difference between the reference timing and the timing 1 so that the signal of the mobile station may arrive in the reference timing. This timing information is referred to as TA information.

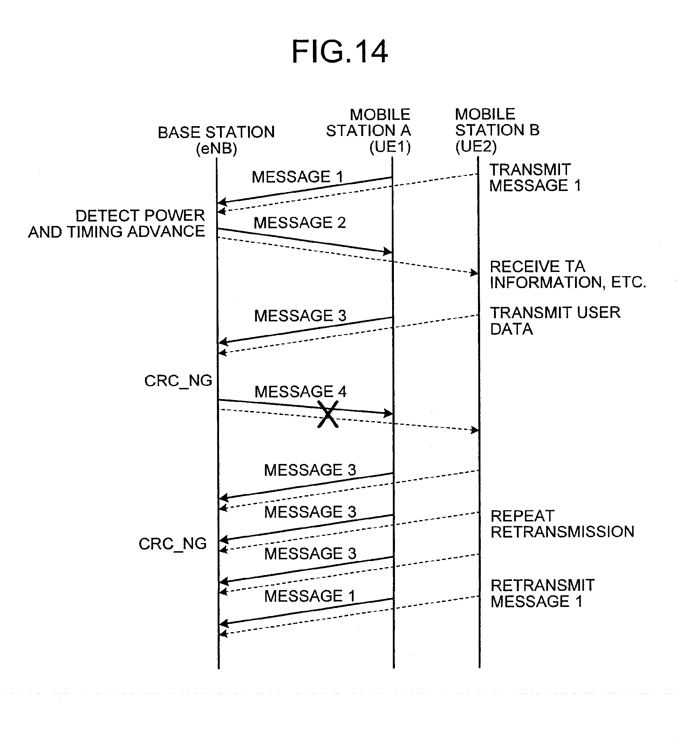

However, in the above-described technology, since only a small number of preambles are used in the RACH, there is a high probability of a plurality of mobile stations transmitting "Message 1" to the base station at the same preamble number and the initial access takes time. Fig. 14 is a diagram for explaining the technology. Fig. 14 illustrates as example the case where two mobile stations (mobile station A and mobile station B) transmit "Message 1" with the same preamble number.

As illustrated in Fig. 14, if the mobile stations A and B transmit "Message 1" with the same preamble number, it arrives at the base station like a multipath and the base station performs the power detection, calculates the TA information, and transmits the TA information by means of "Message 2" to the mobile stations A and B.

Each of the mobile stations A and B continues to process the TA information as the information addressed to itself and transmits the information unique to the mobile station by means of "Message 3" to the base station. At this point, collision of "Message 3" takes place. At the base station, since the information unique to the mobile station A and the information unique to the mobile station B contained in respective "Message 3" differ, respective signals interfere with each other and "Message 3" may not be demodulated.

As a result, with no "Message 4" being transmitted to the mobile stations A and B, the mobile stations A and B retransmit "Message 3" to the base station. Until receipt of "Message 4", the mobile stations A and B continue to retransmit "Message 3" for the preset maximum number of retransmission times.

Only after retransmission of "Message 3" for the maximum number of retransmission times, the mobile stations A and B recognize the collision and restart the initial access by transmitting "Message 1" and accordingly, the initial access takes time.

Accordingly, it is desirable to provide a communication system and a mobile station capable of reducing the time taken for initial access.

SUMMARY

According to an aspect of an embodiment, a communication system includes a base station and a mobile station that communicates with the base station. The mobile station includes: a first transmitting unit that transmits a first signal containing a preamble number to the base station; a receiving unit that receives from the base station first timing information indicating a difference between reference time of the base station and time the first signal has arrived at the base station; a calculating unit that calculates second timing information indicating a difference between the reference time of the base station and time the first signal is expected to arrive at the base station; and a second transmitting unit that transmits to the base station any one of the first signal and a second signal containing individual information unique to the mobile station based on the first timing information and the second timing information.

According to another aspect of an embodiment, a mobile station that communicates with a base station includes: a first transmitting unit that transmits a first signal containing a preamble number to the base station; a receiving unit that receives from the base station first timing information indicating a difference between reference time of the base station and time the first signal has arrived at the base station; a calculating unit that calculates second timing information indicating a difference between the reference time of the base station and time the first signal is expected to arrive at the base station; and a second transmitting unit that transmits to the base station any one of the first signal and a second signal containing individual information unique to the mobile station based on the first timing information and the second timing information.

According to another aspect of an embodiment, a communication method applied to a mobile station that communicates with a base station, includes: transmitting a first signal containing a preamble number to the base station; receiving from the base station first timing information indicating a difference between reference time of the base station and time the first signal has arrived at the base station; calculating second timing information indicating a difference between the reference time of the base station and time the first signal is expected to arrive at the base station; and transmitting to the base station any one of the first signal and a second signal containing individual information unique to the mobile station based on the first timing information and the second timing information.

Additional advantages of the invention (embodiment) will be set forth in part in the description which follows, and in part may be apparent from the description, or may be learned by practice of the invention. The advantages of the invention may be realized and attained by means of the elements and combinations particularly pointed out in the appended claims.

It is to be understood that both the foregoing general description and the following detailed description are exemplary and explanatory only and are not restrictive of the invention, as claimed.

BRIEF DESCRIPTION OF THE DRAWINGS

Fig. 1 is a diagram of one example of a configuration of a communication system according to a first embodiment;
Fig. 2 is a diagram for explaining one example of exchange of signals in the communication system according to the first embodiment;
Fig. 3 is a diagram of one example of a configuration of a mobile station according to the first embodiment;
Fig. 4 is a diagram for explaining a method of estimating a position of a base station;
Fig. 5 is a flowchart of the operation of the mobile station according to the first embodiment;
Fig. 6 is a diagram of one example of a configuration of the mobile station according to a second embodiment;
Fig. 7 is a diagram of a relationship between a height of received power and a weighting coefficient k;
Fig. 8 is a flowchart of the operation of the mobile station according to the second embodiment;
Fig. 9 is a diagram of one example of a configuration of the mobile station according to a third embodiment;
Fig. 10 is a diagram of a relationship between a moving velocity and a weighting coefficient v;
Fig. 11 is a flowchart of the operation of the mobile station according to the third embodiment;
Fig. 12 is a diagram of a sequence up to completion of an initial access by RACH;
Fig. 13 is a diagram for explaining TA information; and
Fig. 14 is a diagram for explaining a comparative technology.

DETAILED DESCRIPTION OF THE PREFERRED EMBODIMENTS

Exemplary embodiments of the present invention are described in detail below with reference to the accompanying drawings.

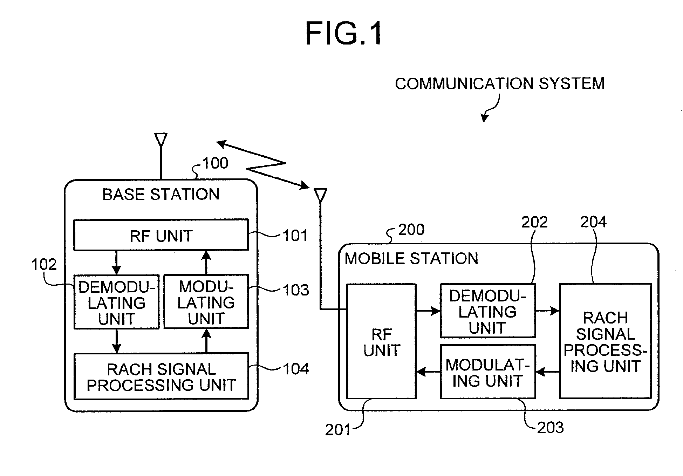

Fig. 1 is a diagram of one example of a configuration of the communication system according to a first embodiment. As illustrated in, this communication system has a base station 100 and a mobile station 200 and performs an initial access, using a RACH (Random Access Channel). Although Fig. 1 illustrates only the base station 100 and the mobile station 200, this communication system includes other base stations and mobile stations.

The base station 100 includes an RF unit 101, a demodulating unit 102, a modulating unit 103, and a RACH signal processing unit 104. The RF unit 101 receives a signal transmitted by the mobile station 200, outputting the received signal to the demodulating unit 102, and of transmitting the signal input from the modulating unit 103 to the mobile station 200.

The demodulating unit 102 demodulates the signal input from the RF unit 101 and outputting the demodulated signal to the RACH signal processing unit 104. The modulating unit 103 modulates the signal input from the RACH signal processing unit 104 and outputs the modulated signal to the RF unit 101.

The RACH signal processing unit 104 responds to a request to connect a call from the mobile station 200 (or other mobile stations). Specifically, the RACH signal processing unit 104, upon receipt of "Message 1" from the mobile station 200, performs power detection, calculates TA information, and transmits the TA information by means of "Message 2" to the mobile station 200.

As explained in Fig. 14, the TA information contains the information on a difference between a reference timing preset at the base station 100 and the timing of receipt of "Message 1". The mobile station 200 adjusts the timing of transmitting the signal referring to the TA information.

Thereafter, the RACH signal processing unit 104, upon receipt of "Message 3" containing inherent information from the mobile station 200, transmits information necessary for the connection of the call by means of "Message 4" to the mobile station 200. In the case of simultaneous receipt of "Message 3" from a plurality of mobile stations which have transmitted "Message 1" at the same preamble number, the RACH signal processing unit 104, due to occurrence of the collision of "Message 3", may not transmit "Message 4" to the applicable mobile station.

The mobile station 200 includes an RF unit 201, a demodulating unit 202, a modulating unit 203, and a RACH signal processing unit 204 (detailed configuration of the mobile station 200 will be explained later). The RF unit 201 receives a signal transmitted from the base station 100, outputting the received signal to the demodulating unit 202, and transmitting the signal input from the modulating unit 203 to the base station 100.

The demodulating unit 202 demodulates the signal input from the RF unit 201 and outputting the demodulated signal to the RACH signal processing unit 204. The modulating unit 203 modulates the signal input from the RACH signal processing unit 204 and outputting the modulated signal to the RF unit 201.

The RACH signal processing unit 204 requests the base station 100 to connect the call using the RACH. Specifically, the RACH signal processing unit 204 first selects the preamble number at random and transmits "Message 1" to the base station.

The RACH signal processing unit 204, in the case of acquiring the TA information by means of "Message 2" from the base station 100, determines whether the acquired TA is transmitted thereto (mobile station 200).

The RACH signal processing unit 204 calculates the TA information based on a distance from the base station 100 to the mobile station 200 and a propagation path delay amount (amount of delay of the radio wave from the mobile station 200 to the base station 100). The TA information calculated by the mobile station 200 (RACH signal processing unit 204) itself is hereinafter referred to as estimated TA information.

The RACH signal processing unit 204 compares the TA information received from the base station 100 and the estimated TA information and determines, based on results of comparison, whether the TA information received from the base station is transmitted thereto (mobile station 200). If the TA information is addressed thereto, then the RACH signal processing unit 204 transmits "Message 3" containing the individual information to the base station 100. On the other hand, if the TA information is not addressed thereto, then the RACH signal processing unit 204 retransmits "Message 1" to the base station 100.

As seen above, the communication system according to the first embodiment, in which the mobile station changes the signal to be transmitted to the base station ("Message 3" or "Message 1"), based on the TA information and the estimated TA information, is capable of avoiding the collision of "Message 3" at the base station 100 and shortening the initial access time for connection of the call.

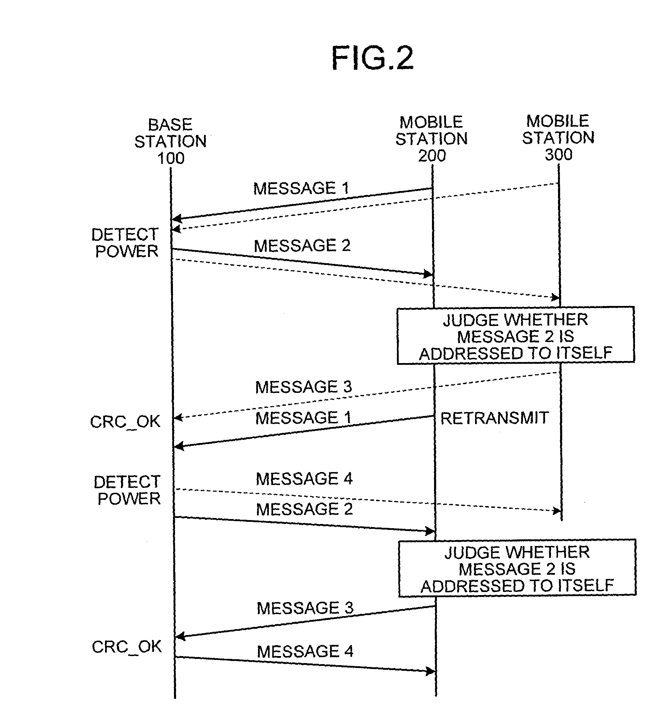

Fig. 2 is a diagram for explaining one example of exchange of signals in the communication system according to the first embodiment. The example of Fig. 2 assumes that mobile stations (200 and 300) transmit "Message 1" containing the same preamble number. Then, the base station 100 calculates the TA information and transmits "Message 2" to the mobile stations 200 and 300 (it is assumed that the mobile station 300 is of the same configuration as the mobile station 200).

If the TA information contained in "Message 2" is for the mobile station 300, the mobile station 200 determines that the TA information is not addressed thereto, and retransmits "Message 1" to the base station 100. On the other hand, the mobile station 300 determines that the TA information is addressed thereto, and transmits "Message 3" to the base station 100.

The base station 100 demodulates "Message 3" transmitted from the mobile station 300 and transmits the information necessary for the call connection by means of "Message 4" to the mobile station 300 and the mobile station 300, by receiving and demodulating "Message 4", completes the initial access.

The base station 100, in the case of repeated receipt of "Message 1" from the mobile station 200, calculates the TA information and transmits "Message 2" to the mobile station 200. The mobile station 200, determining that the received TA information is addressed thereto, transmits "Message 3" to the base station 100.

The base station 100 demodulates "Message 3" transmitted from the mobile station 200 and transmits the information necessary for the call connection by means of "Message 4" to the mobile station 200 and the mobile station 200, by receiving and demodulating the signal, completes the initial access.

As seen above, with each mobile station comparing the TA information and the estimated TA information and determining whether the TA information is addressed thereto, the collision of "Message 3" may be avoided. Accordingly, there is no transmission of "Message 3" for the maximum number of retransmission times and the initial access time is shortened.

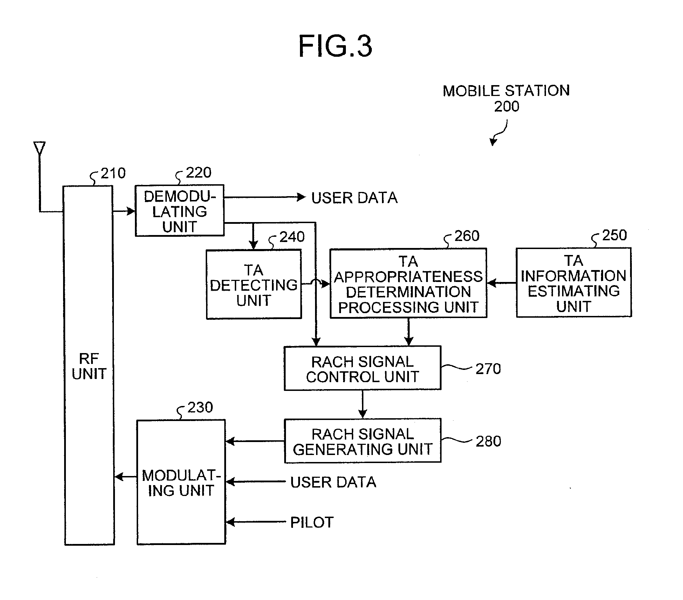

Fig. 3 is a diagram of one example of a configuration of the mobile station 200 according to the first embodiment. As illustrated in Fig. 3, this mobile station 200 includes an RF unit 210, a demodulating unit 220, a modulating unit 230, a TA detecting unit 240, a TA information estimating unit 250, a TA appropriateness determination processing unit 260, a RACH signal control unit 270, and a RACH signal generating unit 280.

Out of these, the RF unit 210 receives the signal transmitted from the base station 100, outputting the received signal to the demodulating unit 220, and transmitting the signal input from the modulating unit 230 to the base station 100.

The demodulating unit 220 demodulates the signal input from the RF unit 210. The demodulating unit 220 outputs user data contained in the demodulated signal to other processing unit (not shown) and outputs the demodulated signal to the TA detecting unit 240 and the RACH signal control unit 270.

The modulating unit 230 generates (modulating) the signal to be transmitted to the base station 100, based on the signal input from the RACH signal generating unit 280, the user data input from other processing unit, and a pilot signal for estimating the channel.

The TA detecting unit 240 detects the TA information from the signal input from the demodulating unit 220 and outputting the detected TA information to the TA appropriateness determination processing unit 260.

The TA information estimating unit 250 estimates the position of the mobile station 200 (position of its own) from the distance between the base station 100 and the mobile station 200 and the propagation path delay amount and calculating the estimated TA information. While any technique of known technologies may be used for calculation of the position of its own, the use of, for example, AFLT (Advanced Forward Link Trilateration) system, etc., enables calculating the position of its own.

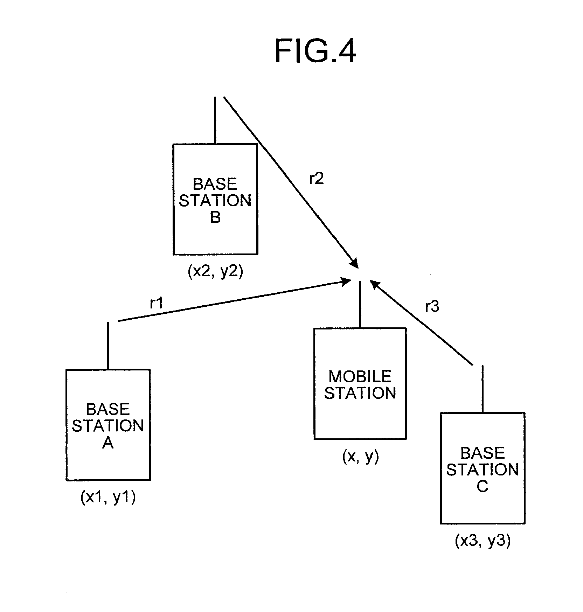

Fig. 4 is a diagram for explaining a method of estimating the position of the base station. In Fig. 4, the positions of the base stations A, B, and C are known and their positional coordinates are given as (x1, y1), (x2, y2), and (x3, y3), respectively. The positional coordinates of the mobile station are given as (x, y) and the distance between the base station A and the mobile station is given as r1, the distance between the base station B and the mobile station as r2, and the distance between the base station C and the mobile station as r3.

The relationship of the distance between the base station and the mobile station, the positional coordinates of the base station and the positional coordinates of the mobile station may be expressed by the following equations (1) to (3) :

$$r1^2 = (x-x1)^2 + (y-y1)^2 \qquad\qquad (1)$$

$$r2^2 = (x-x2)^2 + (y-y2)^2 \qquad\qquad (2)$$

$$r3^2 = (x-x3)^2 + (y-y3)^2 \qquad\qquad (3)$$

The time at which the base station A transmits a broadcast signal is given as tx1, the time at which the mobile station receives the signal is given as tr1, the time at which the base station B transmits a broadcast signal is given as tx2, the time at which the mobile station receives the signal is given as tr2, the time at which the base station C transmits a broadcast signal is given as tx3, and the time at which the mobile station receives the signal is given as tr3.

Since the base stations A, B, and C and the mobile station are in synchronization on a predetermined timing as a prerequisite of the AFLT system, the mobile station may treat the times tx1 to tx3 at which the base stations A, B, and C transmit the broadcast signal as known information.

The relationship of the time at which the base station transmits the broadcast signal, the time at which the mobile station receives the broadcast signal, and the distance between the base station and the mobile station may be expressed by the following equations (4) to (6), where "c" contained in the equations (4) to (6) represents the speed of light.

$$r1=c(tr1-tx1) \tag{4}$$

$$r2=c(tr2-tx2) \tag{5}$$

$$r3=c(tr3-tx3) \tag{6}$$

The TA information estimating unit 250 calculates the positional coordinates (x, y) of the mobile station, using the above equations (1) to (6). The TA information estimating unit 250 then calculates the distance between the mobile station 200 and the base station 100 based on the positional coordinates of its own and the positional coordinates of the base station, estimates the time at which the radio wave reaches the base station, based on the calculated distance and the speed of light, and calculates the estimated TA time by obtaining a difference between the estimated time and the reference timing of the base station.

The TA information estimating unit 250 calculates the propagation delay amount by communicating with the base station 100 and corrects the estimated TA time according to the calculated propagation delay amount. While the positional coordinates of the mobile station 200 were obtained, by way of example, as two-dimensional coordinates, they may also be obtained as three-dimensional coordinates. The position of the mobile station 200 may also be calculated using techniques other than the AFLT system (e.g., GPS <Global Positioning System>).

The TA appropriateness determination processing unit 260 compares the TA information and the estimated TA information, determining whether the TA information from the base station 100 is addressed thereto, and outputting results of determination to the RACH signal control unit 270.

Specifically, the TA appropriateness determination processing unit 260 calculates a difference value between the TA information and the estimated TA information (hereinafter, TA difference information) and, by comparing the TA difference information with a first threshold and a second threshold (first threshold>second threshold), outputs n (n represents a natural number of two or over; in the first embodiment, description will be made with n=3 for the convenience of description) kinds of determination results to the RACH signal control unit 270.

The TA appropriateness determination processing unit 260 outputs first determination results to the RACH signal control unit 270 if the TA difference information is greater than the first threshold. The TA appropriateness determination processing unit 260 outputs second determination results to the RACH signal control unit 270 if the TA difference information is equal to or smaller than the first threshold but greater than the second threshold. The TA appropriateness determination processing unit 260 outputs third determination results to the RACH signal control unit 270 if the TA difference information is equal to or smaller than the second threshold.

The probability of the TA information being the TA information addressed to the mobile station 200 becomes greater in the order of the first determination results, the second determination results, and the third determination results. In other words, when the TA appropriateness determination processing unit 260 outputs the first determination results, it indicates an extremely low possibility of the TA information being the TA information addressed to the mobile station 200. On the other hand, when the TA appropriateness determination processing unit 260 outputs the third determination results, it indicates an extremely high possibility of the TA information being the TA information addressed to the mobile station 200.

The RACH signal control unit 270 controls the RACH signal generating unit 280 to transmit various signals based on the RACH to the base station 100. First, in the case of making the request to connect the call to the base station 100, the RACH signal control unit 270 selects a preamble number at random and controls the RACH signal generating unit 280 to transmit "Message 1" to the base station 100.

Then, upon receipt of "Message 2" from the base station 100, the RACH signal control unit 270 determines whether to retransmit "Message 1" or transmit "Message 3" to the base station 100, based on the determination results of the TA appropriateness determination processing unit 260.

(Case of Acquiring First Determination Results)

When the first determination results are acquired, the RACH signal control unit 270 transmits "Message 3" to the base station 100 for a number of times (hereinafter, a first number of times) obtained by subtracting a threshold x1 from the maximum number of retransmission times m (maximum number of times "Message 3" is to be retransmitted; m is a natural number).

In the case of not receiving "Message 4" from the base station 100 even after transmission of "Message 3" for the first number of times, the RACH signal control unit 270 transmits "Message 1" to the base station 100. Since, in the case of acquiring the first determination results, there is a low possibility that the TA information is addressed thereto, the RACH signal control unit 270 may retransmit "Message 1" without first transmitting "Message 3".

(Case of Acquiring Second Determination Results)

When the second determination results are acquired, the RACH signal control unit 270 transmits "Message 3" to the base station 100 for a number of times (hereinafter, a second number of times) obtained by subtracting a threshold x2 (provided x1>x2) from the maximum number of transmission times m. In the case of not receiving "Message 4" from the base station 100 even after transmission of "Message 3" for the second number of times, the RACH signal control unit 270 transmits "Message 1" to the base station 100.

(Case of Acquiring Third Determination Results)

When the third determination results are acquired, the RACH signal control unit 270 transmits "Message 3" to the base station 100 for a number of times (hereinafter, a third number of times) obtained by subtracting a threshold x3 (provided x1>x2>x3) from the maximum number of transmission times m. In the case of not receiving "Message 4" from the base station 100 even after transmission of "Message 3" for the third number of times, the RACH signal control unit 270 transmits "Message 1" to the base station 100.

In the case of receiving "Message 4" from the base station 100, the RACH signal control unit 270 makes the call connection with the base station 100, based on the necessary information for the call connection, contained in "Message 4". The RACH signal generating unit 280 generates "Message 1", "Message 3", etc., under control of the RACH signal control unit 270.

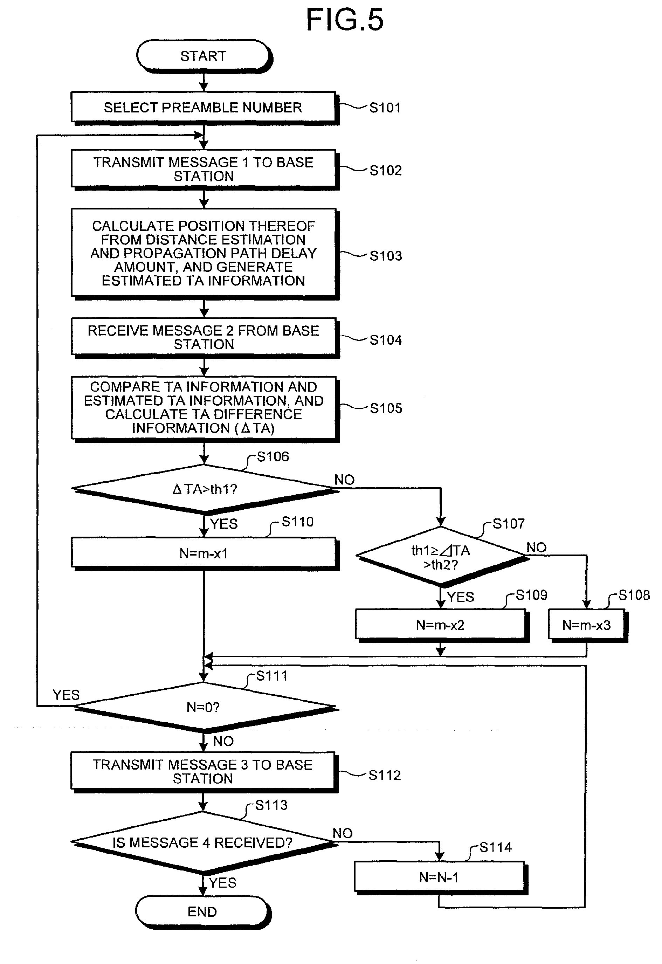

Fig. 5 is a flowchart of the operation of the mobile station 200 according to the first embodiment. In the description of Fig. 5, by way of example, TA resolution is given as about 150 m (0.52 $\mu$sec), the first threshold th1 as "1.04 $\mu$s", the second threshold th2 as "0.52 $\mu$s", the maximum number of transmission times m as "4", the threshold x1 as "4 (value equal to the maximum number of transmission times m)", the threshold x2 as "2", and the threshold x3 as "0".

As illustrated in Fig. 5, the mobile station 200 selects the preamble number (Step S101), transmits "Message 1" to the base station 100 (Step S102), calculates the position thereof from the distance estimation and the propagation path delay amount, and generates the estimated TA information (Step S103).

The mobile station 200 receives "Message 2" from the base station 100 (Step S104). The mobile station 200 compares the TA information and the estimated TA information, and calculates the TA difference information ($\Delta$TA) (Step S105). If the TA difference information is equal to or smaller than the first threshold "1.04 $\mu$s" (No at Step S106), then it is determined whether the TA difference information satisfies a condition of th1(1.04 $\mu$s)$\geq\Delta$TA>th2(0.52 $\mu$s) (Step S107).

If the TA difference information does not satisfy the condition of th1(1.04 $\mu$s)$\geq\Delta$TA>th2(0.52 $\mu$s) (No at Step S107), then the mobile station 200 substitutes a value of m(4)-x3(0) into a variable N (Step S108), and the process moves to Step S111.

On the other hand, if the TA difference information satisfies the condition of th1(1.04 $\mu$s)$\geq\Delta$TA>th2(0.52 $\mu$s) (Yes at Step S107), the mobile station 200 substitutes a value of m(4)-x2(2) into the variable N (Step S109), and the process moves to Step S111.

If the TA difference information is greater than the first threshold "1.04 $\mu$s" (Yes at Step S106), then the mobile station 200 substitutes a value of m(4)-x1(4) into the variable N (Step S110) and determines whether the value of the variable N is "0" (Step S111).

If the value of the variable N is "0" (Yes at Step S111), the process moves to Step S102. On the other hand, if the value of the variable N is other than "0" (No at Step S111), the mobile station 200 transmits "Message 3" to the base station 100 (Step S112) and, upon receipt of "Message 4" from the base station 100 (Yes at Step S113), terminates the process (the initial access is completed). On the other hand, in the case of not receiving "Message 4" from the base station 100 (No at Step S113), the mobile station 200 subtracts 1 from the value of the variable N (Step S114), and the process moves to Step S111.

The process of Step S103 is not required to be performed between Step S102 and Step S104 but is only required to be completed before Step S105.

As explained above, the communication system according to the first embodiment, in which the mobile station 200 calculates the estimated TA information based on the position of the mobile station 200 and the propagation path delay amount, determines, based on the TA information transmitted from the base station 100 and the estimated TA information, whether the TA information is addressed thereto, and determines whether to transmit "Message 3" to the base station 100 depending on the determination results, is capable of avoiding a collision between the signal transmitted from other mobile station and the signal transmitted therefrom and shortening the time required for the initial access.

Described below is a mobile station of a communication system according to a second embodiment. The mobile station according to the second embodiment detects the received power of the radio wave transmitted from the base station 100, corrects the TA difference information based on detection results, and determines whether the TA information from the base station 100 is addressed thereto using the corrected TA difference information.

As seen above, the mobile station, which corrects the TA difference information based on the results of detection of the received signal power, is capable of more accurately determining whether the TA information transmitted from the base station 100 is addressed thereto. Since the configuration of the communication system according to the second embodiment is the same as that of the communication system according to the first embodiment, description thereof is omitted.

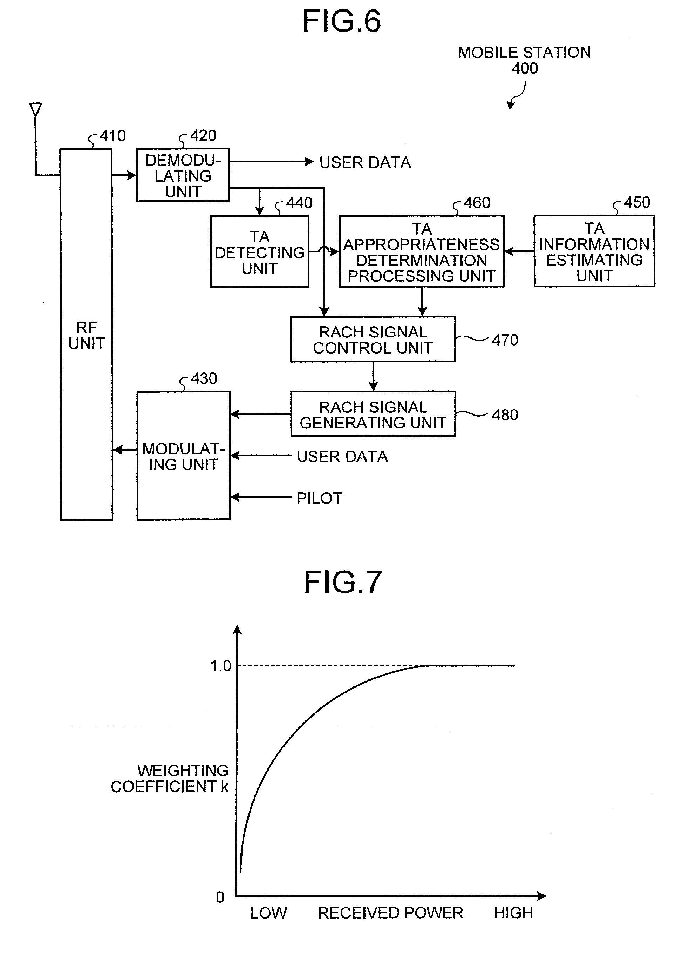

The configuration will then be explained of a mobile station 400 according to the second embodiment. Fig. 6 is a functional block diagram of one example of the configuration of the mobile station 400 according to the second embodiment. As illustrated in Fig. 6, the mobile station 400 includes an RF unit 410, a demodulating unit 420, a modulating unit 430, a TA detecting unit 440, a TA information estimating unit 450, a TA appropriateness determination processing unit 460, a RACH signal control unit 470, and a RACH signal generating unit 480.

Description is omitted of the RF unit 410, the demodulating unit 420, the modulating unit 430, the TA detecting unit 440, the TA information estimating unit 450, the RACH signal control unit 470, and the RACH signal generating unit 480 since the description thereof is the same as that of the RF unit 210, the demodulating unit 220, the modulating unit 230, the TA detecting unit 240, the TA information estimating unit 250, the RACH signal control unit 270, and the RACH signal generating unit 280 illustrated in Fig. 3.

The TA appropriateness determination processing unit 460 determines whether the TA information from the base station 100 is addressed thereto based on the TA information, the estimated TA information, and the received power of the radio wave. Specifically, the TA appropriateness determination processing unit 460 calculates the TA difference information by obtaining the difference between the TA information and the estimated TA information.

The TA appropriateness determination processing unit 460 also detects the height of the received power of the radio wave received from the base station 100 and calculates a weighting coefficient k, based on the received power detected. Fig. 7 is a diagram of a relationship between the height of the received power and the weighting coefficient k. As illustrated in Fig. 7, the weighting coefficient k assumes a value of $0 < k \leq 1.0$ and the weighting coefficient k comes closer to the value 1 as the received power becomes higher and comes closer to the value 0 as the received power becomes lower.

The TA appropriateness determination processing unit 460, by dividing the value of TA difference information by the weighting coefficient k, calculates a probability coefficient Pk and, by comparing the probability coefficient Pk with a first threshold and a second threshold (first threshold>second threshold), outputs n (n represents a natural number of two or over; in the second embodiment, description will be made with n=3 for the convenience of description) kinds of determination results to the RACH signal control unit 470.

The TA appropriateness determination processing unit 460 outputs first determination results to the RACH signal control unit 470 if the probability coefficient Pk is greater than the first threshold. The TA appropriateness determination processing unit 460 outputs second determination results to the RACH signal control unit 470 if the probability coefficient Pk is equal to or smaller than the first threshold but greater than the second threshold. The TA appropriateness determination processing unit 460 outputs third determination results to the RACH signal control unit 470 if the probability coefficient Pk is equal to or smaller than the second threshold.

The probability of the TA information being the TA information addressed to the mobile station 400 becomes greater in the order of the first determination results, the second determination results, and the third determination results. In other words, when the TA appropriateness determination processing unit 460 outputs the first determination results, it indicates an extremely low possibility of the TA information being the TA information addressed to the mobile station 400. On the other hand, when the TA appropriateness determination processing unit 460 outputs the third determination results, it indicates an extremely high possibility of the TA information being the TA information addressed to the mobile station 400.

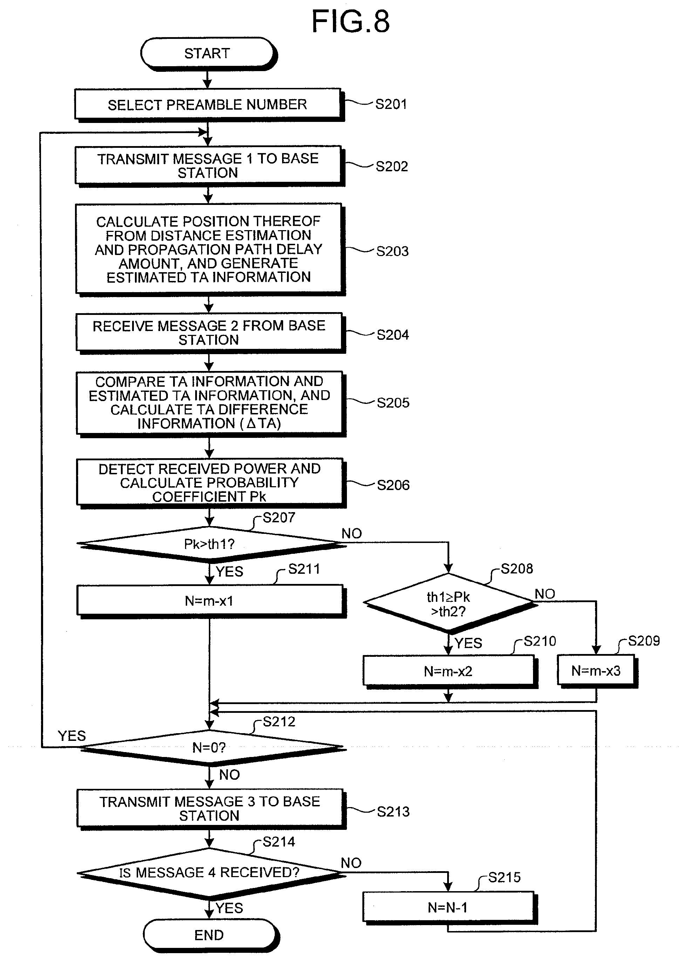

Described below is the operation of the mobile station 400 according to the second embodiment. Fig. 8 is a flowchart of the operation of the mobile station 400 according to the second embodiment. In the description of Fig. 8, by way of example, TA resolution is given as about 150 m (0.52 $\mu$sec), the first threshold th1 as "1.04 $\mu$s", the second threshold th2 as "0.52 $\mu$s", the maximum number of transmission times m as "4", the threshold x1 as "4 (value equal to the maximum number of transmission times m)", the threshold x2 as "2", and the threshold x3 as "0".

As illustrated in Fig. 8, the mobile station 400 selects the preamble number (Step S201), transmits "Message 1" to the base station 100 (Step S202), calculates the position thereof from the distance estimation and the propagation path delay amount, and generates the estimated TA information (Step S203).

The mobile station 400 receives "Message 2" from the base station 100 (Step S204), compares the TA information and the estimated TA information, and calculates the TA difference information ($\Delta$TA) (Step S205).

The mobile station 400 detects the received power, calculates the probability coefficient Pk (Step S206), and, in the case of the probability coefficient Pk being equal to or smaller than the first threshold "1.04 $\mu$s" (No at Step S207), determines whether the probability coefficient Pk satisfies a condition of th1(1.04 $\mu$s)$\geq$Pk>th2(0.52 $\mu$s) (Step S208).

If the probability coefficient Pk does not satisfy the condition of th1(1.04 $\mu$s)$\geq$Pk>th2(0.52 $\mu$s) (No at Step S208), then the mobile station 400 substitutes a value of m(4)-x3(0) into a variable N (Step S209), and the process moves to Step S212.

On the other hand, if the probability coefficient PK satisfies the condition of th1(1.04 $\mu$s)$\geq$Pk>th2(0.52 $\mu$s) (Yes at Step S208), then the mobile station 400 substitutes a value of m(4)-x2(2) into the variable N (Step S210), and the process moves to Step S212.

If the probability coefficient Pk is greater than the first threshold "1.04 $\mu$s" (Yes at Step S207), then the mobile station 400 substitutes a value of m(4)-x1(4) into the variable N (Step S211) and determines whether the value of the variable N is "0" (Step S212).

If the value of the variable N is "0" (Yes at Step S212), the process moves to Step S202. On the other hand, if the value of the variable N is other than "0" (No at Step S212), then the mobile station 400 transmits "Message 3" to the base station 100 (Step S213) and, upon receipt of "Message 4" from the base station 100 (Yes at Step S214), terminates the process (the initial access is completed). On the other hand, in the case of not receiving "Message 4" from the base station 100 (No at Step S214), the mobile station 400 subtracts 1 from the value of the variable N (Step S215), and the process moves to Step S212.

The process of Step S203 is not required to be performed between Step S202 and Step S204 but is only required to be completed before Step S205. While, in the case of Yes at Step S212, "Message 1" is retransmitted, Step S203 is not always required.

The detection of the received power at Step S206 is only required to be completed before the calculation of the probability coefficient Pk. In the case of Yes at Step S212, if "Message 1" is retransmitted and if there is no change in the received power, the probability coefficient Pk is not necessarily required to be calculated.

As explained above, according to the second embodiment, the mobile station 400 calculates the estimated TA information based on the position of the mobile station 400 and the propagation path delay amount, determines, based on the TA information transmitted from the base station 100, the estimated TA information, and the height of the received power of the radio wave, whether the TA information is addressed thereto, and determines whether to transmit "Message 3" to the base station 100 depending on the determination results. This prevents a collision between the signal transmitted from other mobile station and the signal transmitted therefrom and shortens the time required for the initial access.

While, in the second embodiment, whether the TA information is addressed thereto is determined by calculating the probability coefficient Pk by diving the TA difference information by the weighting coefficient k, the determination is not limited to this but the weighting coefficient k may be applied to the first threshold and the second threshold.

In such case, when the received power is low, it is preferable that values of the first and the second thresholds be smaller as compared with such values before application of the weighting coefficient. When the received power is high, it is preferable that the values of the first and the second thresholds be the same or greater as compared with such values before the application of the weighting coefficient.

For example, if the weighting coefficient is applied to the first and the second thresholds, the first and the second thresholds may be expressed by the following equations:

```
th1(after application)=th1(before application)×k
```

```
th2(after application)=th2(before application)×k
```

A mobile station 500 will then be explained of the communication system according to a third embodiment. The mobile station according to the third embodiment detects the moving velocity thereof, corrects the TA difference information based on detection results, and determines whether the TA information from the base station is addressed thereto using the corrected TA difference information.

As seen above, the mobile station, which corrects the TA difference information based on the results of detection of the moving velocity, is capable of more accurately determining whether the TA information transmitted from the base station 100 is addressed thereto. Since the configuration of the communication system according to the third embodiment is the same as the system configuration of Fig. 1, description thereof is omitted.

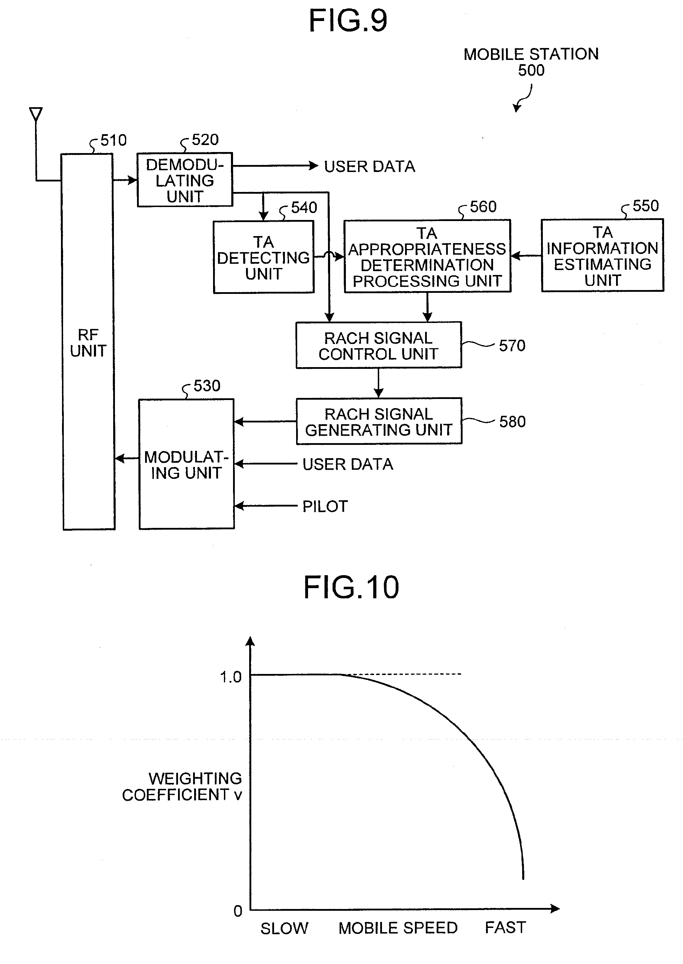

The configuration will then be explained of the mobile station 500 according to the third embodiment. Fig. 9 is a diagram of one example of the configuration of the mobile station 500 according to the third embodiment. As illustrated in Fig. 9, the mobile station 500 includes an RF unit 510, a demodulating unit 520, a modulating unit 530, a TA detecting unit 540, a TA information estimating unit 550, a TA appropriateness determination process unit 560, a RACH signal control unit 570, and a RACH signal generating unit 580.

Description is omitted of the RF unit 510, the demodulating unit 520, the modulating unit 530, the TA detecting unit 540, the TA information estimating unit 550, the RACH signal control unit 570, and the RACH signal generating unit 580 since the description thereof is the same as that of the RF unit 210, the demodulating unit 220, the modulating unit 230, the TA detecting unit 240, the TA information estimating unit 250, the RACH signal control unit 270, and the RACH signal generating unit 280 illustrated in Fig. 3.

The TA appropriateness determination processing unit 560 determines whether the TA information from the base station is addressed thereto based on the TA information, the estimated TA information, and the moving velocity thereof (mobile station 500). The TA appropriateness determination processing unit 560 calculates the moving velocity using a known technology.

Specifically, the TA appropriateness determination processing unit 560 calculates the TA difference information by obtaining the difference between the TA information and the estimated TA information. The TA appropriateness determination processing unit 560 also detects the moving velocity thereof and calculates a weighting coefficient v, based on the detected moving velocity.

Fig. 10 is a diagram of a relationship between the moving velocity and the weighting coefficient v. As illustrated in Fig. 10, the weighting coefficient v assumes a value of $0<v\leq1.0$ and the weighting coefficient v comes closer to the value 1 as the moving velocity of its own becomes lower (slower) and comes closer to the value 0 as the moving velocity of its own becomes higher (faster).

The TA appropriateness determination processing unit 560, by dividing the value of TA difference information by the weighting coefficient v, calculates a probability coefficient Pv and, by comparing the probability coefficient Pv with a first threshold and a second threshold (first threshold>second threshold), outputs n (n represents a natural number of two or over; in the third embodiment, description will be made with n=3 for the convenience of description) kinds of determination results to the RACH signal control unit 570.

The TA appropriateness determination processing unit 560 outputs first determination results to the RACH signal control unit 570 if the probability coefficient Pv is greater than the first threshold. The TA appropriateness determination processing unit 560 outputs second determination results to the RACH signal control unit 570 if the probability coefficient Pv is equal to or smaller than the first threshold but greater than the second threshold. The TA appropriateness determination processing unit 560 outputs third determination results to the RACH signal control unit 570 if the probability coefficient Pv is equal to or smaller than the second threshold.

The probability of the TA information being the TA information addressed to the mobile station 500 becomes greater in the order of the first determination results, the second determination results, and the third determination results. In other words, when the TA appropriateness determination processing unit 560 outputs the first determination results, it indicates an extremely low possibility of the TA information being the TA information addressed to the mobile station 500. On the other hand, when the TA appropriateness determination processing unit 560 outputs the third determination results, it indicates an extremely high possibility of the TA information being the TA information addressed to the mobile station 500.

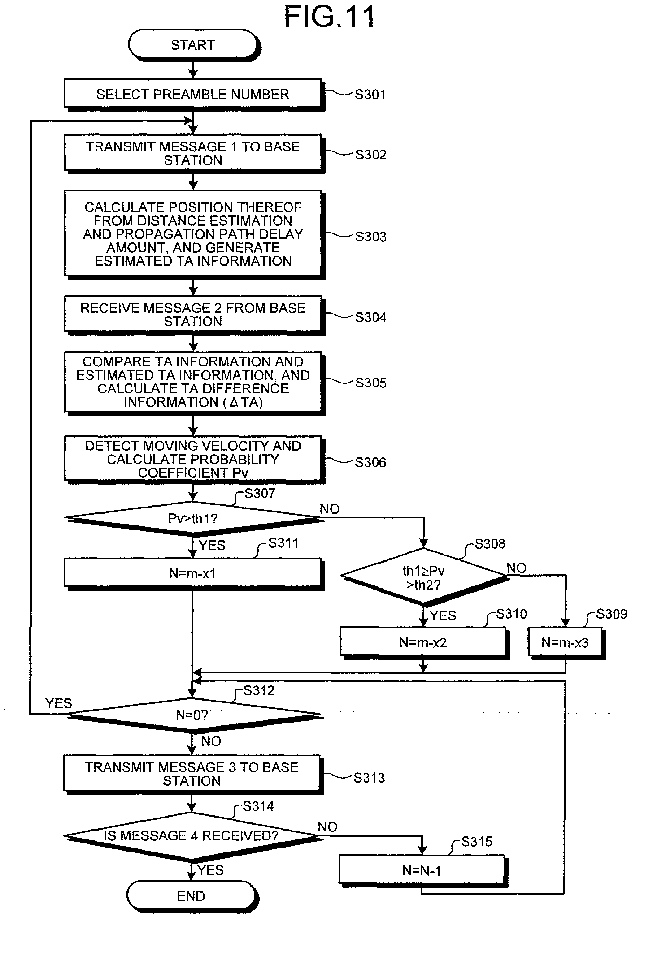

Described below is the operation of the mobile station 500 according to the third embodiment. Fig. 11 is a flowchart of the operation of the mobile station 500 according to the third embodiment. In the description of Fig. 11, by way of example, the first threshold th1 is given as "1.04 μs", the second threshold th2 as "0.52 μs", the maximum number of transmission times m as "4", the threshold x1 as "4 (value equal to the maximum number of transmission times m)", the threshold x2 as "2", and the threshold x3 as "0".

As illustrated in Fig. 11, the mobile station 500 selects the preamble number (Step S301), transmits "Message 1" to the base station 100 (Step S302), calculates the position thereof from the distance estimation and the propagation path delay amount, and generates the estimated TA information (Step S303).

The mobile station 500 receives "Message 2" from the base station 100 (Step S304), compares the TA information and the estimated TA information, and calculates the TA difference information (ΔTA) (Step S305).

The mobile station 500 detects the moving velocity, calculates the probability coefficient Pv (Step S306), and, in the case of the probability coefficient Pv being equal to or smaller than the first threshold "1.04 μs" (No at Step S307), determines whether the probability coefficient Pv satisfies a condition of th1(1.04 μs)≥Pv>th2(0.52 μs) (Step S308).

If the probability coefficient Pv does not satisfy the condition of th1(1.04 μs)≥Pv>th2(0.52 μs) (No at Step S308), the mobile station 500 substitutes a value of m(4)-x3(0) into a variable N (Step S309), and the process moves to Step S312.

On the other hand, if the probability coefficient Pv satisfies the condition of th1(1.04 μs)≥Pv>th2(0.52 μs) (Yes

at Step S308), then the mobile station 500 substitutes a value of m(4)-x2(2) into the variable N (Step S310), and the process moves to Step S312.

If the probability coefficient Pv is greater than the first threshold "1.04 μs" (Yes at Step S307), then the mobile station 500 substitutes a value of m(4)-x1(4) into the variable N (Step S311) and determines whether the value of the variable N is "0" (Step S312).

If the value of the variable N is "0" (Yes at Step S312), the process moves to Step S302. On the other hand, if the value of the variable N is other than "0" (No at Step S312), then the mobile station 500 transmits "Message 3" to the base station 100 (Step S313) and, upon receipt of "Message 4" from the base station 100 (Yes at Step S314), terminates the process (the initial access is completed). On the other hand, in the case of not receiving "Message 4" from the base station 100 (No at Step S314), the mobile station 500 subtracts 1 from the value of the variable N (Step S315), and the process moves to Step S312.

The process of Step S303 is not required to be performed between Step S302 and Step S304 but is only required to be completed before Step S305. The number of times of the process of Step S303 may be increased depending on the moving velocity (for example, the number of times is increased in the case of a high moving velocity).

While, in the case of Yes at Step S312, "Message 1" is retransmitted, Step S303 is not always required. The detection of the moving velocity at Step S306 is only required to be completed before the calculation of the probability coefficient Pv. For example, in the case of Yes at Step S312, if "Message 1" is retransmitted and if there is no movement of the mobile station, the probability coefficient Pv is not necessarily required to be calculated.

As explained above, the communication system according to the third embodiment, in which the mobile station 500 calculates the estimated TA information based on the position of the mobile station 500 and the propagation path delay amount, determines, based on the TA information transmitted from the base station 100, the estimated TA information, and the moving velocity thereof, whether the TA information is addressed thereto, and determines whether to transmit "Message 3" to the base station 100 depending on the determination results, is capable of avoided collision of the signal transmitted from other mobile station and the signal transmitted therefrom and shortening the time required for the initial access.

While, in the third embodiment, the mobile station determines whether the TA information is addressed thereto by calculating the probability coefficient Pv by diving the TA difference information by the weighting coefficient v, the determination is not limited to this but the weighting coefficient v may be applied to the first threshold and the second threshold.

In such case, when the moving velocity is high (fast), it is preferable that values of the first and the second thresholds be smaller as compared with such values before application of the weighting coefficient. When the moving velocity is low (slow), it is preferable that the values of the first and the second thresholds be the same or greater as compared with such values before the application of the weighting coefficient.

For example, if the weighting coefficient is applied to the first and the second thresholds, the first and the second thresholds may be expressed by the following equations:

$$\mathtt{th1(after\ application)=th1(before\ application)\times v}$$

$$\mathtt{th2(after\ application)=th2(before\ application)\times v}$$

The foregoing embodiments are susceptible to considerable variation in their practice. Accordingly, the embodiments are not intended to be limited to the specific exemplifications set forth hereinabove.

For example, in the first to the third embodiments, the mobile station retransmits "Message 1" to the base station 100 upon determining that the TA information from the base station 100 is not addressed thereto. However, in the case of retransmission of "Message 1" to the base station 100, the RACH signal control units 270, 470, and 570 may perform various processes.

For example, the RACH signal control units 270, 470, and 570, in the case of retransmission of "Message 1" to the base station 100, may change the preamble number contained in "Message 1" or may change the timing of retransmission (transmitting timing) of "Message 1" based on the TA information.

For example, the RACH signal control units 270, 470, and 570 may transmit "Message 1" by so arranging that the reference timing of the base station 100 and the timing of "Message 1" are the same or by so arranging that the timing of "Message 1" advances by a predetermined amount of time from the reference timing, based on the TA information. The RACH signal control units 270, 470, and 570 may change the transmission power when transmitting "Message 1".

As seen above, the RACH signal control units 270, 470, and 570, by changing the preamble number, the transmitting timing, and the transmission power in the case of retransmission of "Message 1", are capable of preventing the collision with the signal transmitted from other mobile station.

As set forth hereinabove, according to an embodiment, the mobile station determines, based on the first timing information and the second timing information, whether to transmit the individual information thereof or the first signal to the base station. This prevents a collision between the individual information thereof and the individual information of the other mobile station, and the time required for the initial access may be shortened.

According to an embodiment, the mobile station calculates the second timing information based on the distance between the base station and its own and/or the amount of delay of the radio wave transmitted or received between the base station and its own. Thus, the second timing information may be calculated accurately.

According to an embodiment, the mobile station determines whether to transmit the individual information thereof or the first signal to the base station further using at least one of moving velocity thereof and the received signal power of the radio wave. This more accurately prevents a collision between the individual information thereof and the individual information of the other mobile station, and the time may be shortened that is required for the initial access.

According to an embodiment, the mobile station changes the preamble number in the case of transmitting the first signal. This prevents a collision between the individual information thereof and the individual information of the other mobile station.

According to an embodiment, the mobile station changes the timing of transmitting the first signal based on the first timing information. This prevents a collision between the individual information thereof and the individual information of the other mobile station.

According to an embodiment, the mobile station changes the transmission power when transmitting the second signal. This prevents a collision between the individual information thereof and the individual information of the other mobile station.

All examples and conditional language recited herein are intended for pedagogical purposes to aid the reader in understanding the principles of the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiment(s) of the present invention(s) has(have) been described in detail, it should be understood that the various changes, substitutions, and alterations could be made hereto without departing from the spirit and scope of the invention.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

**Claims**

1. A communication system comprising:

   a base station (100); and
   a mobile station (200) that communicates with the base station (100), and includes

      a first transmitting unit (270) that transmits a first signal containing a preamble number to the base station (100),
      a receiving unit (210) that receives from the base station (100) first timing information indicating a difference between reference time of the base station (100) and time the first signal has arrived at the base station (100),
      a calculating unit (250) that calculates second timing information indicating a difference between the reference time of the base station (100) and time the first signal is expected to arrive at the base station (100), and
      a second transmitting unit (270) that transmits to the base station (100) any one of the first signal and a second signal containing individual information unique to the mobile station (200) based on the first timing information and the second timing information.

2. The communication system according to claim 1, wherein the calculating unit (250) calculates the second timing information based on at least one of a distance between the base station (100) and the mobile station (200) and an amount of delay of a radio wave transmitted or received between the base station (100) and the mobile station (200).

3. The communication system according to claim 1 or 2, wherein the second transmitting unit (270) transmits to the base station (100) any one of the first signal and the second signal containing the individual information unique to the mobile station (200) based further on at least one of moving velocity of the mobile station (200) and received signal power.

4. The communication system according to any one of claims 1 to 3, wherein
   the first transmitting unit (270) sets one of a plurality of pre-arranged preamble numbers to the first signal and transmits the first signal to the base station (100), and
   the second transmitting unit (270) changes, when transmitting the first signal to the base station (100), the preamble number set to the first signal.

5. The communication system according to any one of claims 1 to 4, wherein the second transmitting unit (270) changes, when transmitting the first signal to the base station (100), time to transmit the first signal based on the first timing information.

6. The communication system according to any one of claims 1 to 5, wherein the second transmitting unit (270) changes, when transmitting the first signal to the base station (100), transmission power of the first signal.

7. A mobile station (200) that communicates with a base station (100) comprising:

   a first transmitting unit (270) that transmits a first signal containing a preamble number to the base station (100);
   a receiving unit (210) that receives from the base station (100) first timing information indicating a difference between reference time of the base station (100) and time the first signal has arrived at the base station (100);
   a calculating unit (250) that calculates second timing information indicating a difference between the reference time of the base station (100) and time the first signal is expected to arrive at the base station (100); and
   a second transmitting unit (270) that transmits to the base station (100) any one of the first signal and a second signal containing individual information unique to the mobile station (200) based on the first timing information and the second timing information.

8. The mobile station (200) according to claim 7, wherein the calculating unit (250) calculates the second timing information based on at least one of a distance between the base station (100) and the mobile station (200) and an amount of delay of a radio wave transmitted or received between the base station (100) and the mobile station (200).

9. The mobile station (200) according to claim 7 or 8, wherein the calculating unit (250) corrects the second timing information based on at least one of moving velocity of the mobile station (200) and received signal power.

10. The communication system according to any one of claims 7 to 9, wherein
    the first transmitting unit (270) sets one of a plurality of pre-arranged preamble numbers to the first signal and transmits the first signal to the base station (100), and
    the second transmitting unit (270) changes, when transmitting the first signal to the base station (100), the preamble number set to the first signal.

11. The communication system according to any one of claims 7 to 10, wherein the second transmitting unit (270) changes, when transmitting the first signal to the base station (100), time to transmit the first signal based on the first timing information.

12. The communication system according to any one of claims 7 to 11, wherein the second transmitting unit (270) changes, when transmitting the first signal to the base station (100), transmission power of the first signal.

13. A communication method applied to a mobile station that communicates with a base station, the communication method comprising:

    transmitting a first signal containing a preamble number to the base station;
    receiving from the base station first timing information indicating a difference between reference time of the base station and time the first signal has arrived at the base station;

calculating second timing information indicating a difference between the reference time of the base station and time the first signal is expected to arrive at the base station; and

transmitting to the base station any one of the first signal and a second signal containing individual information unique to the mobile station based on the first timing information and the second timing information.

# FIG.1

COMMUNICATION SYSTEM

BASE STATION ~100

RF UNIT ~101

DEMODU-LATING UNIT 102

MODU-LATING UNIT ~103

RACH SIGNAL PROCESSING UNIT ~104

MOBILE STATION ~200

RF UNIT 201

DEMODU-LATING UNIT 202

MODULAT-ING UNIT 203

RACH SIGNAL PROCESS-ING UNIT 204

# FIG.2

# FIG.3

MOBILE STATION
200

# FIG.4

BASE
STATION
B

(x2, y2)

r2

r1

MOBILE
STATION

(x, y)

r3

BASE
STATION
A

(x1, y1)

BASE
STATION
C

(x3, y3)

# FIG.5

```
                    ┌──────────────┐
                    │    START     │
                    └──────┬───────┘
                           │
              ┌────────────────────────┐
              │ SELECT PREAMBLE NUMBER │────S101
              └────────────┬───────────┘
                           │
              ┌────────────────────────┐
              │ TRANSMIT MESSAGE 1 TO  │────S102
              │      BASE STATION      │
              └────────────┬───────────┘
                           │
              ┌────────────────────────┐
              │ CALCULATE POSITION     │
              │ THEREOF FROM DISTANCE  │
              │ ESTIMATION AND         │────S103
              │ PROPAGATION PATH DELAY │
              │ AMOUNT, AND GENERATE   │
              │ ESTIMATED TA INFORMATION│
              └────────────┬───────────┘
```

COMPARE TA INFORMATION AND ESTIMATED TA INFORMATION, AND CALCULATE TA DIFFERENCE INFORMATION ($\Delta$TA) ──S105

RECEIVE MESSAGE 2 FROM BASE STATION ──S104

SELECT PREAMBLE NUMBER ──S101

TRANSMIT MESSAGE 1 TO BASE STATION ──S102

S106 $\Delta$TA>th1?  NO

YES  S110  N=m-x1

S107 th1$\geq\Delta$TA >th2?  NO

YES  S109  N=m-x2

S108  N=m-x3

S111  N=0?  YES

NO

TRANSMIT MESSAGE 3 TO BASE STATION ──S112

S113  IS MESSAGE 4 RECEIVED?  NO

S114  N=N-1

YES

END

# FIG.6

MOBILE STATION
400

# FIG.7

# FIG.8

```
              ┌─────────────┐
              │    START    │
              └─────────────┘
                     │
                     ▼
        ┌──────────────────────────┐
        │  SELECT PREAMBLE NUMBER  │───── S201
        └──────────────────────────┘
                     │
                     ▼
        ┌──────────────────────────┐
        │ TRANSMIT MESSAGE 1 TO BASE│───── S202
        │         STATION          │
        └──────────────────────────┘
                     │
                     ▼
        ┌──────────────────────────┐
        │ CALCULATE POSITION THEREOF│
        │ FROM DISTANCE ESTIMATION  │
        │ AND PROPAGATION PATH DELAY│───── S203
        │ AMOUNT, AND GENERATE      │
        │ ESTIMATED TA INFORMATION  │
        └──────────────────────────┘
                     │
                     ▼
        ┌──────────────────────────┐
        │ RECEIVE MESSAGE 2 FROM BASE│──── S204
        │         STATION          │
        └──────────────────────────┘
                     │
                     ▼
        ┌──────────────────────────┐
        │ COMPARE TA INFORMATION AND│
        │ ESTIMATED TA INFORMATION, AND│── S205
        │ CALCULATE TA DIFFERENCE   │
        │ INFORMATION (ΔTA)         │
        └──────────────────────────┘
                     │
                     ▼
        ┌──────────────────────────┐
        │ DETECT RECEIVED POWER AND │───── S206
        │ CALCULATE PROBABILITY     │
        │ COEFFICIENT Pk            │
        └──────────────────────────┘
```

S207 — Pk>th1? — NO

S208 — th1≥Pk >th2? — NO

YES

S211 — N=m-x1

S210 — N=m-x2    S209 — N=m-x3

S212 — N=0? — YES

NO

S213 — TRANSMIT MESSAGE 3 TO BASE STATION

S214 — IS MESSAGE 4 RECEIVED? — NO

S215 — N=N-1

YES

END

# FIG.9

MOBILE STATION
500

# FIG.10

# FIG.11

```
                    START

            SELECT PREAMBLE NUMBER          S301

            TRANSMIT MESSAGE 1 TO BASE       S302
                    STATION

            CALCULATE POSITION THEREOF
            FROM DISTANCE ESTIMATION
            AND PROPAGATION PATH DELAY       S303
            AMOUNT, AND GENERATE
            ESTIMATED TA INFORMATION

            RECEIVE MESSAGE 2 FROM BASE      S304
                    STATION

            COMPARE TA INFORMATION AND
            ESTIMATED TA INFORMATION, AND    S305
            CALCULATE TA DIFFERENCE
            INFORMATION (ΔTA)

            DETECT MOVING VELOCITY AND
            CALCULATE PROBABILITY            S306
            COEFFICIENT Pv
```

S307

Pv>th1? —— NO

YES S311

N=m-x1

S308

th1≥Pv >th2? —— NO

YES S310          S309

N=m-x2          N=m-x3

S312

YES —— N=0?

NO

TRANSMIT MESSAGE 3 TO BASE     S313
STATION

S314

IS MESSAGE 4 RECEIVED? —— NO

S315

YES

N=N-1

END

# FIG.12

BASE STATION
(eNB)

MOBILE STATION
(UE1)

MESSAGE 1 — TRANSMIT MESSAGE 1

DETECT POWER
AND TIMING ADVANCE

MESSAGE 2

RECEIVE TA
INFORMATION, ETC.

MESSAGE 3 — TRANSMIT USER
DATA

CRC_OK

MESSAGE 4

COMPLETE INITIAL
ACCESS

# FIG.13

AMPLITUDE

REFERENCE TIMING OF
BASE STATION

INITIAL REFERENCE TIMING
(TIMING 1) OF
MOBILE TERMINAL

TIME

TA

# FIG.14

BASE STATION (eNB) — MOBILE STATION A (UE1) — MOBILE STATION B (UE2)

MESSAGE 1 — TRANSMIT MESSAGE 1

DETECT POWER AND TIMING ADVANCE — MESSAGE 2

RECEIVE TA INFORMATION, ETC.

MESSAGE 3 — TRANSMIT USER DATA

CRC_NG — MESSAGE 4

MESSAGE 3

MESSAGE 3 — REPEAT RETRANSMISSION

CRC_NG — MESSAGE 3

MESSAGE 1 — RETRANSMIT MESSAGE 1

Europäisches
Patentamt
European
Patent Office
Office européen
des brevets

## EUROPEAN SEARCH REPORT

Application Number

EP 09 15 2310

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | TD TECH: "Contention Resolution and Initial Random Access" 3GPP DRAFT; R2-070910, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. St. Louis, USA; 20070212, 13 February 2007 (2007-02-13), XP050133923 * chapter 2.1 and 3.2 * ----- | 1,7,13 | INV. H04W74/08 |
| A | PHILIPS ET AL: "Control of HARQ for RACH messages 3 and 4" 3GPP DRAFT; R2-080301, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Sevilla, Spain; 20080114, 7 January 2008 (2008-01-07), XP050138162 *chapter 1. * ----- | 1,7,13 | TECHNICAL FIELDS SEARCHED (IPC) H04W |
| A | ERICSSON: "Non-Synchronized Random Access in E-UTRAN" 3GPP DRAFT; R2-061866, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Cannes, France; 20060627, 21 June 2006 (2006-06-21), XP050141903 * chapter 2.3 * ----- | 1,7,13 | |

The present search report has been drawn up for all claims

| Place of search | Date of completion of the search | Examiner |
|---|---|---|
| Munich | 10 July 2009 | Schorgg, Alfred |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002524990 A
- JP 2001326978 A
- JP 2004274794 A